# EUROPEAN PATENT SPECIFICATION

(11) **EP 1 540 141 B1**
(45) Date of publication and mention of the grant of the patent: **09.05.2007**
(21) Application number: 03733815.9
(22) Date of filing: 30.06.2003
(51) Int. Cl.: F01D 9/04, F01D 5/12, B23K 26/20, B23P 15/04

(54) **METHOD FOR MANUFACTURING A STATOR OR ROTOR COMPONENT**
VERFAHREN ZUR HERSTELLUNG EINES STATOR- ODER ROTORTEILS
PROCEDE DE FABRICATION D'UN COMPOSANT DE STATOR ET DE ROTOR

(30) Priority: 14.08.2002 SE 0202422; 14.08.2002 US 402946 P
(43) Date of publication of application: 15.06.2005
(73) Proprietor: Volvo Aero Corporation, 46181 Trollhättan (SE)
(72) Inventor: LUNDGREN, Jan, S-450 33 Grundsund (SE)
(74) Representative: Fröhling, Werner Otto
(86) International application number: PCT/SE2003/001145
(87) International publication number: WO 2004/016911

(56) References cited:
- EP-A2- 0 995 673
- DE-A1- 3 942 051
- US-A- 5 483 034
- US-B1- 6 321 448

## Description

### FIELD OF THE INVENTION

The present invention relates to a method for manufacturing a stator or rotor component which is intended during operation to conduct a gas flow. The stator or rotor component can, for example, be used in a gas turbine and especially in a jet engine.

Jet engine is meant to include various types of engines which admit air at relatively low velocity, heat it by combustion and shoot it out at a much higher velocity. Accommodated within the term jet engine are, for example, turbojet engines and turbo-fan engines.

The component is primarily intended for static applications, but rotary applications might also enter into consideration. A stator component of this kind, comprising an outer and an inner ring with wall parts arranged between the rings, can be arranged with a view to primarily being force-transmitting in the radial and axial direction. The wall parts can, for example, form hollow blades, which are usually shaped such that they offer as little air resistance as possible. The component can, for example, be arranged in a rear or front stand in a jet engine. The blades are often referred to in such a case as stays or "struts". Struts can, however, also be formed by other types of parts than hollow blades.

### PRIOR ART

According to the prior art, wall parts in the form of hollow blades are arranged at a distance apart in the circumferential direction of the component between an inner and an outer ring. The hollow blades are joined together with the rings by welding. Each of the rings are made in this case firstly with portions of the same cross-dimensional shape and size as the blades, protruding in the radial direction. Such protruding portions are often referred to as "stubs". Each of the blades are then welded to a protruding portion of this kind by means of a butt joint. The radially protruding portions are usually mill-cut from a ring. This is a time-consuming and costly operation.

US 5,483,034 discloses a process to produce partitioned boxes by carrying out the fastening from the outside of said boxes. More specifically, the partitioned boxes form arms in a turbojet engine structure and are adapted to straighten or deflect a gas flow. Stiffening partitions are positioned inside the box and are fastened to the box via two inclined welds from the outside of the box.

### SUMMARY OF THE INVENTION

One object of the invention is to achieve a method for manufacturing a stator or rotor component which creates preconditions for a manufacture which is simplified and hence time-effective and cost-effective in relation to the prior art. Further, a high-strength component with long working life will be produced with the method.

This object is achieved by the method defined in claim 1.

By the edge of the wall part is meant the elongated surface which delimits the side faces, or flat sides, of the wall part. Given an appropriate choice of material parameters and welding parameters, a T-shaped joint with rounded corners, or at least a relatively smooth transition, can be obtained between the wall parts. This produces a structurally strong construction and hence an extended working life. Alternatively, a construction with thinner wall thicknesses and hence reduced weight can be obtained.

According to a preferred embodiment of the invention, the first wall part is placed with a second edge, which is opposite to the first-named edge, bearing against the flat side of a further second wall part, which latter is arranged at a distance in the circumferential direction from the first-named second wall part and is connected thereto. Further, the two wall parts which are spaced apart in the circumferential direction are constituted by two different blades or stays for guidance of a gas flow and/or transmission of load. The first wall part thus serves here to limit a gas duct in the radial direction between the two blades or stays.

According to a refinement of the previous embodiment, said two second wall parts are formed by a single, substantially U-shaped element. The two wall parts are in this constituted by a portion of the particular leg of the U.

Further preferred embodiments of and advantages with the invention can be ascertained from the further subclaims and the following description.

### BRIEF DESCRIPTION OF THE FIGURES

The invention will be described in greater detail below, with reference to the embodiments shown in the appended drawings, in which:
- FIG 1: shows a basic diagram of the connection between two wall parts forming part of the stator or rotor component,
- FIG 2: shows an enlarged sectional view of a weld joint in the component according to figure 1,
- FIG 3: shows a first preferred embodiment of the component in a cut projection,
- FIG 4: shows a schematic projection of the component according to figure 3, and
- FIG 5: shows a schematic projection of the component according to a second preferred embodiment.

### DETAILED DESCRIPTION OF PREFERRED EMBODIMENTS

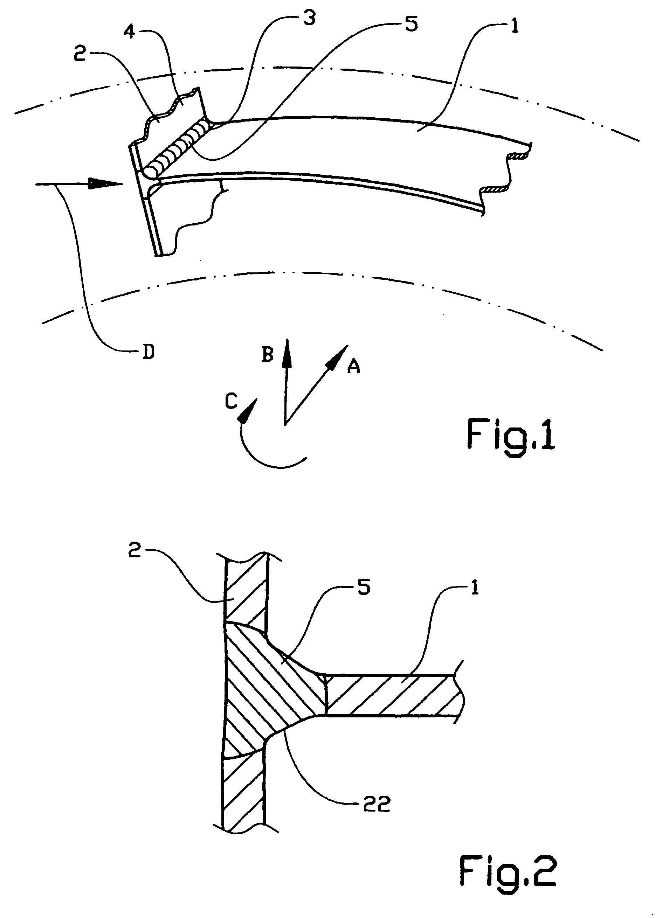

In figure 1 is shown a basic diagram of a connection of a first and second wall part 1, 2 forming part of a stator component. The axial direction, radial direction and circumferential direction of the component are marked in the figure with the arrows A, B, C.

The second wall part 2 is arranged firstly so that it extends essentially in the intended radial and axial direction A, B of the component. The first wall part 1 is placed with its one edge 3 bearing against the flat side 4 of the second wall part in such a way that the first wall part extends essentially in the circumferential direction C of the component and in its axial direction A. By the edge 3 of the first wall part 1 is thus meant the surface connecting its side faces, or flat sides.

The edge 3 of the first wall part 1 is then laser-welded to said second wall part 2 from an, in the circumferential direction, opposite side of the second wall part 2 in relation to the first wall part 1 in such a way that the joined-together portions of the wall parts form a T-shaped joint 5, see figure 2. The laser-welding is illustrated with the arrow D in figure 1.

By T-joint 5 is meant, more precisely, that a portion of the second wall part 2 forms the top part of the T and a portion of the first wall part 1 forms the vertical part of the T, which connects to the top part.

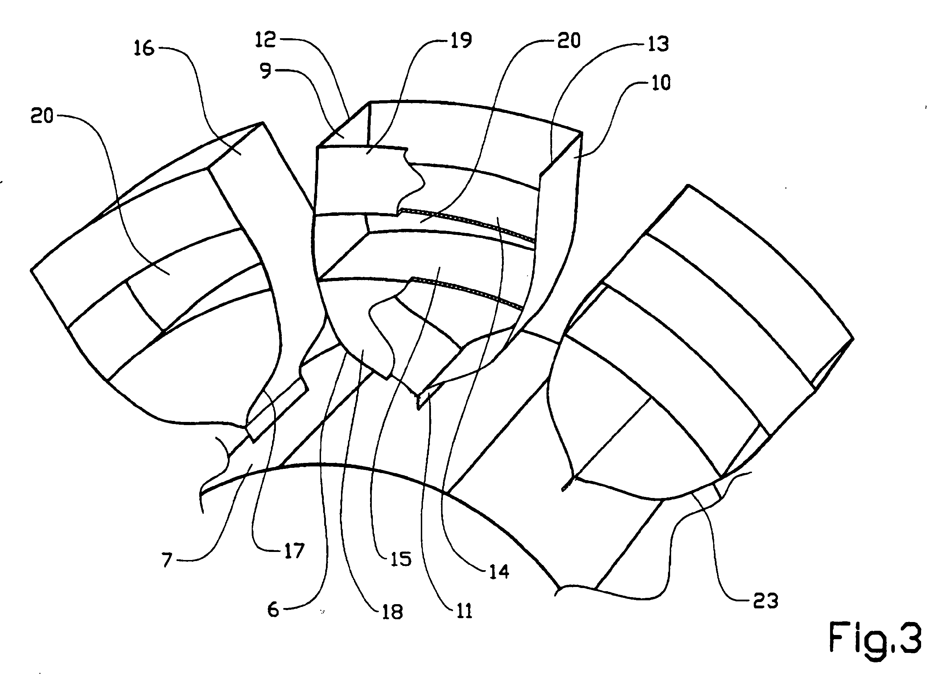

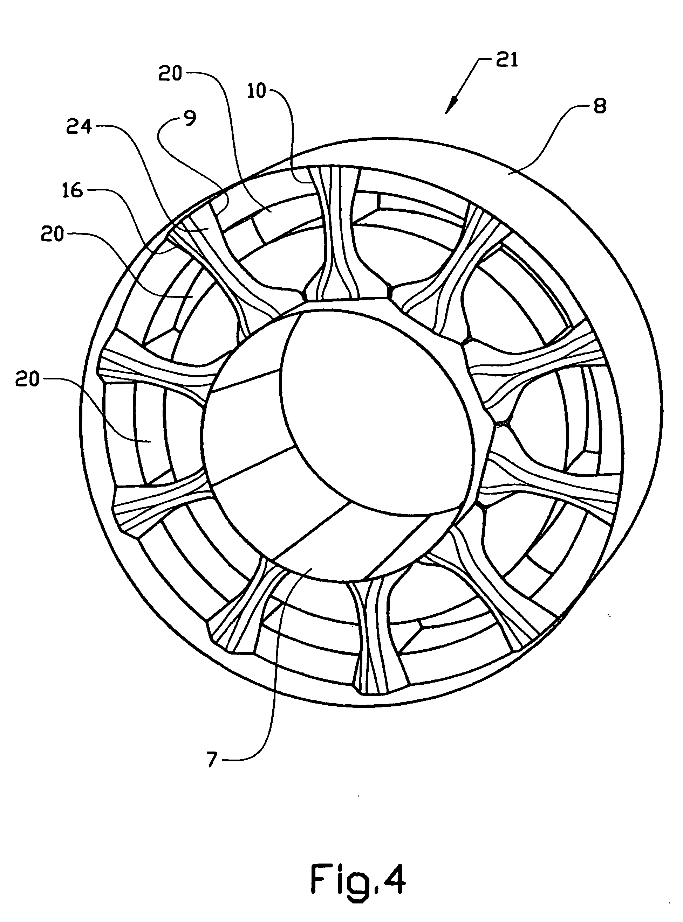

In figure 3 and 4 is shown a first preferred embodiment of the component. Each of a plurality of essentially U-shaped elements 6, 17, 23 are connected to an inner ring element 7 and are placed adjacent to one another in the circumferential direction of the component. The one side member of the U-shaped element 6 forms a second wall part 9 and its other side member forms a further second wall part 10. The base of the U-shaped element 6 is connected to the inner ring element 7 by a rib 11, which extends in the intended axial direction of the component. The ends 12, 13 of the two side members are later connected to an outer ring element 8, see figure 4. Each of the two second wall parts 9, 10 thus extend essentially in the radial and axial direction of the component. The U-shaped element can be made, for example, by curving or bending a plate or a sheet into the desired shape.

Further, two first wall parts 14, 15 are placed such that they extend in the circumferential direction of the component and at various distances apart in the radial direction between the two second wall parts 9, 10. More precisely, the two first wall parts 14, 15 are placed such that they bear with their end edges against the flat side of the second wall parts 9, 10. The end edges of the first wall parts 14, 15 are then laser-welded to the second wall parts 9, 10 from an, in the circumferential direction, opposite side of the second wall part 9, 10 in relation to the first wall part 14, 15. The laser-welding is realized in such a way that the joined-together portions of the wall parts 9, 10, 14, 15 form a T-shaped joint, see figure 2.

The first wall part 15 which limits a gas duct 20 inwardly in the radial direction forms an intermediate portion of a plate-shaped member. This plate-shaped member has a shape corresponding to the space between the second, radial wall parts 9, 10 between these, see figure 3. The plate-shaped member has a U-shaped cross section and is constituted, for example, by a bent, or folded sheet. The side or plate portions 18 of the plate-shaped member have a shape and size corresponding to the space between the second wall parts 9, 10. The side portions of the plate-shaped member are also connected to the second wall parts 9, 10, expediently by laser-welding.

The first wall part 14 which limits the gas duct 20 outwardly in the radial direction forms an intermediate portion of a further plate-shaped member. This plate-shaped member has a shape corresponding to the space between the second, radial wall parts 9, 10 between these, see figure 3. The plate-shaped member also has a U-shaped cross section and is constituted, for example, by a bent, or folded sheet, or by a tube or other profile. The side or plate portions 19 of the plate-shaped member have a shape and size corresponding to the space between the second wall parts 9, 10. The side portions of the plate-shaped member, too, are connected to the second wall parts 9, 10, expediently by laser-welding.

Each of the side members of the U-shaped element 6 are connected to a side member 16 of an, in the circumferential direction, adjoining U-shaped element 17 in such a way that gas cannot flow between the side members, see figure 4. The mutually connected wall parts 9, 16 together form means for guidance of a gas flow and/or transmission of load in the radial direction during operation of the component.

The adjoining wall parts 9, 16 are connected in figure 4 by a front and a rear cover wall 24, which thus enclose a space between the wall parts. These cover walls 24 are aerodynamically configured and have, in this case, a pointed shape so as to offer as little flow resistance as possible. This connection can be produced, for example, by welding. The two connected side members together form a blade, vane, stay or strut for guidance of a gas flow and/or transmission of load. In other words, the two wall parts of the U-shaped element which are spaced apart in the circumferential direction form two different blades or stays for guidance of a gas flow and/or transmission of load.

In figure 4 is shown a schematic projection of a stator or rotor component 21 constructed according to the technique described above and illustrated in figure 3. The component 21 has an essentially circular cross-sectional shape and the ducts 20 for conduction of the gas flow extend in the axial direction between the inner ring, formed by the ring elements 7, and the outer ring 8.

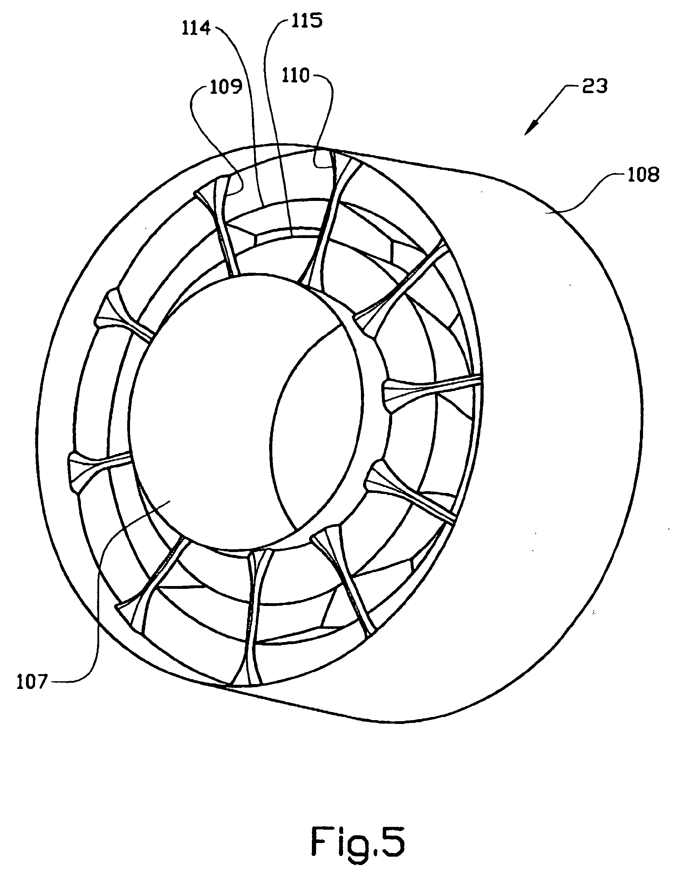

In figure 5 is illustrated a second embodiment of the stator component 23. A basic difference relative to the first embodiment is that the two spaced apart second wall parts 109, 110 do not form part of a U-shaped element but constitute separate units. All the wall parts 109, 110 in the component are first connected to a continuous inner ring 107. The first wall parts 114, 115 are connected to the second wall parts 109, 110 in the same manner as described above for the first embodiment. An outer ring 108 is then arranged around the wall parts 109, 110 and connected thereto.

The materials which are used for the first and second wall parts 1, 2, 9, 10, 14, 15, 109, 110, 114 are constituted by weldable materials, such as stainless steel, for example of the type 347 or A286. Alternatively, nickel-based alloys, such as, for example, INCO600, INCO625, INCO718 and Hastaloy x, can be used. According to further variants, cobalt-based alloys, for example, of the type HAYNES 188 and HAYNES 230, can be used. Further, titanium alloys, such as Ti6-4, Ti6-2-4-2 and various types of aluminum alloys can be used. Combinations of different materials are also possible.

In the laser-welding, a Nd:YAG-laser is preferably used, but also other types of welding arrangements, for example a CO₂-laser, can be used according to the invention. By precise coordination of the welding method, materials choice and wall parts dimensions, the T-shape in respect of a particular joint and a relatively gently rounded shape 22 of the inner angle between the second wall part and the first wall part are obtained with the laser-welding, see figure 2. The welding is expediently realized by means of a continuous weld. The rounded shape of the weld joints produces a high-strength construction and hence long working life for the component. This type of joining-together creates preconditions for a complete melting of the weld joint and fine transitions between the parts.

In order for the weld joint to end up in exactly the right position, a previously known joint-following technique can be used.

The wall part has the shape of a plate. By plate-shape is meant that the wall parts have two parallel side faces at a relatively short distance apart.

By the term ring element used above in the description is meant a continuously annular member, a substantially annular member interrupted in the circumferential direction, or a part which, together with other like parts, is intended to form an annular member. When a plurality of such ring elements are joined together in the circumferential direction, a ring is formed. By ring is meant a circumferential, band-shaped, preferably circular part, which spreads like a plate in the axial direction.

Should the wall parts have the purpose of being load-transmitting or load-bearing in the radial direction, that is to say when they form so-called struts or stays, an airfoil shape is not always required, nor the shape of hollow blades, but rather said plate-shape can suffice. A plurality of different configurations are, however, possible.

Should the second wall parts have the purpose of guiding a gas flow during operation of the component, the mutually connected second wall parts form the shape of a blade, for example, having an airfoil shape in cross section. Such a blade shape is utilized when the component is used in specific stator applications.

The first wall part is not limited to just rounded or curved cross-sectional shape, but rather, for example, a square cross-sectional shape, that is to say made up of essentially straight portions of different direction, are also included.

By the expression that the wall parts extend in a certain direction with respect to the component is meant that at least one component of the extent of the wall part lies in this direction. Preferably, the wall part extends substantially in this direction. In other words, the wall part in question extends in a plane parallel with said direction.

The stator component can, for example, form an inlet part, an intermediate housing, a turbine-exhaust housing, that is to say a concluding housing part, or a part of this for a gas turbine. Its primary function is in this case to act as a bearing fastening, for the transmission of loads, and to provide a duct for gases.

By the expression that a wall part is placed such that it extends in the intended radial direction of the component is meant both that the wall part is placed directly in a structure in the radial direction of the component and that the wall part is first mounted in a section and that a plurality of such sections are then mutually connected in the circumferential direction so that the wall part ends up in said radial direction.

The equivalent applies to when a wall part is placed so that it extends in the intended axial direction of the component and in its circumferential direction.

The invention will not be deemed limited to the illustrative embodiments described above, but a host of further variants and modifications are conceivable within the scope of the subsequent patent claims.

The connection of a wall part extending in the radial direction to another wall part extending in the radial direction can further be effected differently than arranging a cover plate between these. For example, the wall parts can be arranged relatively close together and connected by the application of material, by welding, etc. Further, the cover plates can be fixed in a number of different of ways, such as riveting and gluing.

It is further conceivable for a plurality of separate sections to be made, each comprising a first and a second wall part, and which sections each in cross section form the sector of a circle. The sections are then connected in the intended circumferential direction of the component to form the stator or rotor component. In other words, in the construction of the section, the second wall part is arranged in the intended radial direction of the component and the first wall part in the intended circumferential direction of the component. When a plurality of such sections are put together, the second wall part thus ends up such that it extends in the radial direction of the component and the first wall part such that it extends in the circumferential direction of the component.

## Claims

1. A method for manufacturing a stator or rotor component (21) which is intended during operation to conduct a gas flow, wherein the component (21) has an essentially circular cross-sectional shape and a plurality of ducts (20) for conduction of the gas flow extend in an axial direction between an inner and an outer ring, wherein a first wall part (1, 14, 15, 114) is placed with its one edge (3) bearing against the flat side (4) of a second wall part (4, 9, 109), wherein the edge of the first wall part is then laser-welded to said second wall part from an opposite side of the second wall part in relation to the first wall part in such a way that the joined-together portions of the wall parts form a T-shaped joint (5), the method comprising: positioning the second wall part (4, 9, 109) so that it extends in a radial direction of the component (21) and the first wall part (1, 14, 15, 114) extends in a circumferential and axial direction of the component (21) so that the first wall part (1, 14, 15, 114), extending in the circumferential direction, is arranged so as to limit one of said gas ducts (20) in the radial direction.

2. The method as claimed in claim 1, **characterized in that** the first wall part (1, 14, 15, 114) is placed essentially perpendicular to the flat side of the second wall part (4, 9, 109).

3. The method as claimed in claim 1 or 2, **characterized in that** the second wall part (4, 9, 109) is arranged such that it also extends in the intended axial direction of the component.

4. The method as claimed in any of the preceding claims, **characterized in that** the second wall part (4, 9, 109), extending in the radial direction, is arranged so as to limit a gas duct (20) in the circumferential direction of the component.

5. The method as claimed in any of the preceding claims, **characterized in that** the second wall part (4, 9, 109) is arranged such that it has said essentially radial widening for guidance of said gas flow and/or transmission of load during operation of the component.

6. The method as claimed in any of the preceding claims, **characterized in that** the first wall part (1, 14, 15, 114) has a shape which curves essentially in said circumferential direction.

7. The method as claimed in any of the preceding claims, **characterized in that** the first wall part (14, 15) is placed with a second edge, which is opposite to the first-named edge, bearing against the flat side of a further second wall part (10, 110), which is arranged at a distance in the circumferential direction from the first-named second wall part (9), and is connected thereto.

8. The method as claimed in claim 7, **characterized in that** the edge of the first wall part (14, 15, 114) is also laser-welded to this further second wall part (10, 110) from an, in the circumferential direction, opposite side of the second wall part in relation to the first wall part in such a way that the joined-together portions of the wall parts form a T-shaped joint (5).

9. The method as claimed in claim 7 or 8, **characterized in that** the two wall parts (9, 10, 109, 110) which are spaced apart in the circumferential direction constitute at least part of two different blades or stays for guidance of a gas flow and/or transmission of load.

10. The method as claimed in any of claims 7-9, **characterized in that** said two second wall parts (9, 10) are formed by a single, substantially U-shaped element (6).

11. The method as claimed in any of the preceding claims, **characterized in that** said first and second wall part (9, 10, 14, 15) are arranged between an, in the radial direction, inner and outer ring element (7, 8).

12. The method as claimed in claim 11, **characterized in that** the second wall part (9, 10) is connected to at least one of the ring elements (7, 8) by laser-welding from an, in the radial direction, opposite side of the ring element in relation to the second wall part in such a way that the joined-together portions form a T-shaped joint (5).

13. The method as claimed in claim 10 and either of claims 11 or 12, **characterized in that** the U-shaped element (6), prior to said laser-welding of the wall parts, is arranged between the inner ring element (7) and the outer ring element (8).

14. The method as claimed in any of the preceding claims, **characterized in that** the stator or rotor component (21, 23) is intended for a gas turbine.

15. The method as claimed in any of the preceding claims, **characterized in that** the stator or rotor component (21, 23) is intended for a jet engine.

## Patentansprüche

1. Verfahren zur Herstellung eines Stator- oder Rotorbauelements (21), das während des Betriebs einen Gasstrom leiten soll, wobei
- das Bauelement (21) im wesentlichen eine Kreisquerschnittsform und eine Vielzahl von Kanälen (20) zum Leiten des Gasstroms aufweist, die sich in Axialrichtung zwischen einem inneren und einem äußeren Ring erstrecken,
- ein erstes Wandteil (1, 14, 15, 114), das mit seinem einen Rand (3) gegen die flache Seite (4) eines zweiten Wandteils (4, 9, 109) drückend angeordnet wird,
- der Rand des ersten Wandteils dann mit dem zweiten Wandteil von einer bezogen auf das erste Wandteil gegenüberliegenden Seite des zweiten Wandteils so laserverschweißt wird, dass die miteinander verbundenen Abschnitte der Wandteile eine T-förmige Verbindung (5) bilden, und
- bei dem Verfahren das zweite Wandteil (4, 9, 109) so positioniert wird, dass es sich in einer radialen Richtung des Bauelements (21) erstreckt, und dass sich das erste Wandteil (1, 14, 15, 114) in einer Umfangs- und Axialrichtung des Bauelements (21) so erstreckt, dass das erste Wandteil (1, 14, 15, 114), das sich in der Umfangsrichtung erstreckt, so angeordnet wird, dass es einen der Gaskanäle (20) in der Radialrichtung begrenzt.

2. Verfahren nach Anspruch 1, **dadurch gekennzeichnet, dass** das erste Wandteil (1, 14, 15, 114) im wesentlichen senkrecht zu der flachen Seite des zweiten Wandteils (4, 9, 109) angeordnet wird.

3. Verfahren nach Anspruch 1 oder 2, **dadurch gekennzeichnet, dass** das zweite Wandteil (4, 9, 109) so angeordnet wird, dass es sich auch in der vorgesehenen Axialrichtung des Bauelements erstreckt.

4. Verfahren nach einem der vorhergehenden Ansprüche, **dadurch gekennzeichnet, dass** das zweite Wandteil (4, 9, 109), das sich in der Radialrichtung erstreckt, so angeordnet wird, dass es einen Gaskanal (20) in der Umfangsrichtung des Bauelements begrenzt.

5. Verfahren nach einem der vorhergehenden Ansprüche, **dadurch gekennzeichnet, dass** das zweite Wandteil (4, 9, 109) so angeordnet wird, dass es eine im wesentlichen radiale Aufweitung zum Führen des Gasstroms und/oder zur Lastübertragung während des Einsatzes des Bauteils hat.

6. Verfahren nach einem der vorhergehenden Ansprüche, **dadurch gekennzeichnet, dass** das erste Wandteil (1, 14, 15, 114) eine Form hat, die sich im wesentlichen in der Umfangsrichtung krümmt.

7. Verfahren nach einem der vorhergehenden Ansprüche, **dadurch gekennzeichnet, dass** das erste Wandteil (14, 15) mit einem zweiten Rand, der dem erstgenannten Rand gegenüberliegt, gegen die flache Seite eines weiteren zweiten Wandteils (10, 110) drückend angeordnet wird, das in der Umfangsrichtung in einer Entfernung von dem erstgenannten zweiten Wandteil (9) angeordnet und damit verbunden wird.

8. Verfahren nach Anspruch 7, **dadurch gekennzeichnet, dass** der Rand des ersten Wandteils (14, 15, 114) mit diesem weiteren zweiten Wandteil (10, 110) in der Umfangsrichtung von einer bezogen auf das erste Wandteil gegenüberliegenden Seite des zweiten Wandteils aus auch so laserverschweißt wird, dass die miteinander verbundenen Abschnitte der Wandteile eine T-förmige Verbindung (5) bilden.

9. Verfahren nach Anspruch 7 oder 8, **dadurch gekennzeichnet, dass** die beiden Wandteile (9, 10, 109, 110), die in der Umfangsrichtung beabstandet sind, wenigstens einen Teil von zwei verschiedenen Schaufeln oder Stützen zum Führen eines Gasstroms und/oder zur Lastübertragung bilden.

10. Verfahren nach einem der Ansprüche 7 bis 9, **dadurch gekennzeichnet, dass** die beiden zweiten Wandteile (9, 10) von einem einzigen im wesentlichen U-förmigen Element (6) gebildet werden.

11. Verfahren nach einem der vorhergehenden Ansprüche, **dadurch gekennzeichnet, dass** das erste und das zweite Wandteil (9, 10, 14, 15) zwischen einem in der Radialrichtung inneren und äußeren Ringelement (7, 8) angeordnet werden.

12. Verfahren nach Anspruch 11, **dadurch gekennzeichnet, dass** das zweite Wandteil (9, 10) mit wenigstens einem der Ringelemente (7, 8) durch Laserverschweißen in der Radialrichtung von einer bezogen auf das zweite Wandteil gegenüberliegenden Seite des Ringelements aus so verbunden wird, dass die miteinander verbundenen Teile eine T-förmige Verbindung (5) bilden.

13. Verfahren nach Anspruch 10 und entweder Anspruch 11 oder 12, **dadurch gekennzeichnet, dass** das U-förmige Element (6) vor dem Laserverschweißen der Wandteile zwischen dem inneren Ringelement (7) und dem äußeren Ringelement (8) angeordnet wird.

14. Verfahren nach einem der vorhergehenden Ansprüche, **dadurch gekennzeichnet, dass** das Stator- oder Rotorbauelement (21, 23) für eine Gasturbine vorgesehen wird.

15. Verfahren nach einem der vorhergehenden Ansprüche, **dadurch gekennzeichnet, dass** das Stator- oder Rotorbauelement (21, 23) für ein Strahltriebwerk vorgesehen wird.

## Revendications

1. Procédé de fabrication d'un composant de rotor ou de stator (21) qui est prévu, en fonctionnement, pour conduire un écoulement de gaz, dans lequel le composant (21) a une forme de coupe transversale essentiellement circulaire, et une pluralité de conduits (20) destinés à conduire l'écoulement de gaz s'étendent dans une direction axiale entre des anneaux intérieur et extérieur, dans lequel une première partie de paroi (1, 14, 15, 114) est placée en ayant son bord (3) appuyant contre le côté plat (4) d'une seconde partie de paroi (4, 9, 109), dans lequel le bord de la première partie de paroi est ensuite soudé au laser sur ladite seconde partie de paroi à partir d'un côté opposé de la seconde partie de paroi par rapport à la première partie de paroi, de telle manière que les parties reliées ensemble des parties de paroi forment un joint en forme de T (5), le procédé comportant les étapes consistant à positionner la seconde partie de paroi (4, 9, 109) de sorte qu'elle s'étend dans une direction radiale du composant (21), et la première partie de paroi s'étend dans une direction circonférentielle et axiale du composant (21) de sorte que la première partie de paroi (1, 14, 15, 114), s'étendant dans la direction circonférentielle, est agencée afin de limiter un desdits conduits de gaz (20) dans la direction radiale.

2. Procédé selon la revendication 1, **caractérisé en ce que** la première partie de paroi (1, 14, 15, 114) est placée essentiellement perpendiculaire au côté plat de la seconde partie de paroi (4, 9, 109).

3. Procédé selon la revendication 1 ou 2, **caractérisé en ce que** la seconde partie de paroi (4, 9, 109) est agencée de sorte qu'elle s'étend également dans la direction axiale prévue du composant.

4. Procédé selon l'une quelconque des revendications précédentes, **caractérisé en ce que** la seconde partie de paroi (4, 9, 109), s'étendant dans la direction radiale, est agencée afin de limiter un conduit de gaz (20) dans la direction circonférentielle du composant.

5. Procédé selon l'une quelconque des revendications précédentes, **caractérisé en ce que** la seconde partie de paroi (4, 9, 109) est agencée de sorte qu'elle a ledit élargissement essentiellement radial pour guider ledit écoulement de gaz et/ou la transmission de charge pendant le fonctionnement du composant.

6. Procédé selon l'une quelconque des revendications précédentes, **caractérisé en ce que** la première partie de paroi (1, 14, 15, 114) a une forme qui s'incurve essentiellement dans ladite direction circonférentielle.

7. Procédé selon l'une quelconque des revendications précédentes, **caractérisé en ce que** la première partie de paroi (14, 15) est placée en ayant un deuxième bord, qui est opposé au premier bord cité, appuyant contre le côté plat d'une seconde partie de paroi supplémentaire (10, 110), qui est agencée à une distance dans la direction circonférentielle de la première seconde partie de paroi citée (9), et y est reliée.

8. Procédé selon la revendication 7, **caractérisé en ce que** le bord de la première partie de paroi (14, 15, 114) est également soudé au laser sur cette seconde partie de paroi supplémentaire (10, 110) à partir, dans la direction circonférentielle, d'un côté opposé de la seconde partie de paroi par rapport à la première partie de paroi, de telle manière que les parties reliées ensemble des parties de paroi forment un joint en forme de T (5).

9. Procédé selon la revendication 7 ou 8, **caractérisé en ce que** les deux parties de paroi (9, 10, 109, 110) qui sont espacées dans la direction circonférentielle constituent au moins une partie de deux pales ou entretoises différentes pour guider un écoulement de gaz et/ou une transmission de charge.

10. Procédé selon l'une quelconque des revendications 7 à 9, **caractérisé en ce que** lesdites deux secondes parties de paroi (9, 10) sont constituées par un élément sensiblement en U unique (6).

11. Procédé selon l'une quelconque des revendications précédentes, **caractérisé en ce que** lesdites première et seconde parties de paroi (9, 10, 14, 15) sont agencées entre, dans la direction radiale, des éléments annulaires intérieur et extérieur (7, 8).

12. Procédé selon la revendication 11, **caractérisé en ce que** la seconde partie de paroi (9, 10) est reliée à au moins un des éléments annulaires (7, 8) par soudage au laser à partir, dans la direction radiale, d'un côté opposé de l'élément annulaire par rapport à la seconde partie de paroi, de telle manière que les parties reliées ensemble forment un joint en forme de T (5).

13. Procédé selon la revendication 10, et selon la revendication 11 ou 12, **caractérisé en ce que** l'élément en U (6), avant ledit soudage au laser des parties de paroi, est agencé entre l'élément annulaire intérieur (7) et l'élément annulaire extérieur (8).

14. Procédé selon l'une quelconque des revendications précédentes, **caractérisé en ce que** le composant de stator ou de rotor (21, 23) est prévu pour une turbine à gaz.

15. Procédé selon l'une quelconque des revendications précédentes, **caractérisé en ce que** le composant de stator ou de rotor (21, 23) est prévu pour un moteur à réaction.
